Europäisches Patentamt

European Patent Office

Office européen des brevets

(19)

(11) Publication number: **0 036 750**
**B1**

(12) **EUROPEAN PATENT SPECIFICATION**

(45) Date of publication of patent specification: **27.06.84**

(51) Int. Cl.³: **B 62 M 3/00**

(21) Application number: **81301131.9**

(22) Date of filing: **18.03.81**

(54) **Cycle drive crank.**

(30) Priority: **25.03.80 JP 40045/80 U**

(43) Date of publication of application:
**30.09.81 Bulletin 81/39**

(45) Publication of the grant of the patent:
**27.06.84 Bulletin 84/26**

(84) Designated Contracting States:
**BE DE FR GB IT**

(56) References cited:
**BE - A - 677 542**
**DE - A - 1 505 958**
**FR - A - 2 185 997**
**FR - A - 2 416 829**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-cho, Midorigaoka-minamimachi Sakai-shi**
**Osaka (JP)**

(74) Representative: **Szczuka, Jan Tymoteusz et al,**
**Cruikshank & Fairweather 19 Royal Exchange Square**
**Glasgow G1 3AE Scotland (GB)**

Courier Press, Leamington Spa, England.

## Description

This invention relates to a cycle drive crank means, comprising a crank havinga crank shaft and a pair of crank arms, and at least one chain wheel secured to said crank.

In use of such crank means with pedals mounted on the distal ends of the crank arms,a rider treads on the pedals to turn the crank arms about the crank shaft to drive the cycle via a drive chain. Conventionally, the crank arms are generally rectangular in cross-section, so that when the cycle is ridden at high speed, the rider has to turn the crank arms against an increased air resistance. As a result the rider becomes tired more quickly due to reduced high speed running efficiency of the cycle.

Cycles used for touring or racing are preferably made to be ridden at high speed in a stable condition with the minimum possible air resistance in order to minimize tiring of the rider. However, the abovementioned conventional type of crank arm with its rectangular cross-section, tends to generate a relatively large air resistance as the leading surface of the crank arm drives through the air flow around the cycle and stagnant zones or eddy currents are generated at the trailing sides of the crank arms.

DE—A—1,505,958 discloses a cycle drive crank means comprising a crank having a crank shaft and a pair of crank arms, and one chain wheel secured to said crank, each of said crank arms having, in cross-section, a rounded leading side with respect to the direction of rotation of said crank means for driving of the cycle, and two lateral sides extending rearwardly from said leading side along opposite sides of a central portion of the crank arm to the trailing side. The lateral sides are however parallel to each other so that only a limited reduction in air resistance could be achieved with the crank arm construction disclosed.

It is the object of the present invention to avoid or minimize one or more of the above disadvantages.

The present invention provides a cycle drive crank means comprising a crank having a crank shaft and a pair of crank arms, and at least one chain wheel secured to said crank, each of said crank arms having, in cross-section, a rounded leading side with respect to the direction of rotation of said crank means for driving of the cycle, and two lateral sides extending rearwardly from said leading side along opposite sides of a central portion of the crank arm to the trailing side characterized in that said lateral sides converge inwardly towards each other along their length from the leading side to the trailing side of said crank arm, so that the profile thickness of the central portion adjacent the leading side is larger than the profile thickness of said central portion adjacent the trailing side.

With previously known crank arms air resistance is generated as an air flow strikes the leading surface of the crank arm substantially perpendicularly and then passes along both lateral sides of the same, and is further increased by stagnant zones or eddy currents being generated at the trailing side of the crank arms.

With crank arms of the present invention, however, the air flow passes smoothly around the crank arms so that the crank arms meet with only substantially reduced air resistance. As a result, the rider can drive the cycle at high speed in a stable condition with less tiring.

Further preferred features and advantages of the invention will appear from the following description given by way of example of one embodiment illustrated with reference to the accompanying drawings, in which

Fig. 1 is a side view of a crank means of the invention mounted on a cycle; and

Fig. 2 is a cross-sectional view of a crank arm of the crank means on an enlarged scale.

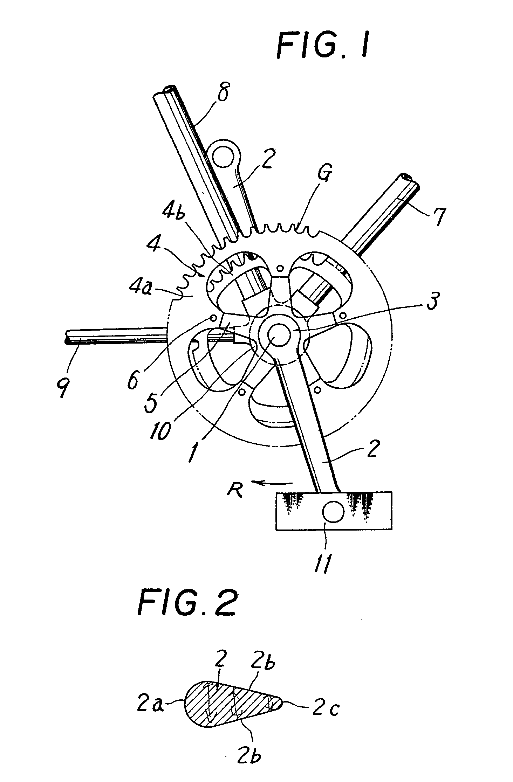

Fig. 1 shows a cycle drive crank means G of the invention comprising a crank 3 having a crank shaft 1 and a pair of crank arms 2 mounted at opposite axial ends of said crank shaft 1, and at least one chain wheel 4 secured thereto for rotation therewith. In more detail Fig. 1 shows a larger diameter chain wheel 4a and a smaller diameter chain wheel 4b mounted on an adapter 5 with the aid of fastening means, such as nuts and bolts 6, the adapter 5 being integrally formed with one crank arm 2 at the axially inward (relative to the crank shaft) side.

The crank shaft 1 is rotatably mounted in a bottom bracket 10 connecting a down tube 7, seat tube 8 and chain stay 9 of the cycle frame. Pedals 11 are mounted at the distal ends of the crank arms 2 for treading by a rider to turn the crank arms in the direction ofthe arrow R shown in Fig. 1, thereby driving the cycle forwards via the usual transmission means comprising a drive chain, sprocket etc. (not shown).

Each crank arm 2 is, as shown in Fig. 2, made arcuate in cross-section at its leading side 2a with respect to the direction of turning of the crank arm 2 for driving of the cycle. Thus during running of the cycle the leading side 2a of each crank arm faces forward into the airflow around the cycle during the main power sector of the crank arm cycle i.e. between its upwardly and forwardly extending positions. Both lateral sides 2b extending along opposite sides of a central portion of the crank arm 2 from said leading side 2a converge inwardly towards each other from the leading side 2a to the trailing side 2c of the crank arm, and the trailing side is also arcuate in cross-section but with a smaller radius of curvature than the leading side 2a.

Naturally, the cycle drive crank means G could instead have only one chain wheel. Also the chain wheel(s) 4a could be secured directly to the crank arm 2 by caulking or other methods. Moreover, the crank shaft 1 could be formed integrally with one or both of the crank arms 2.

With the above cycle drive crank means G a rider treads the pedals 11 to turn the crank arms 2 and hence the chain wheels 4a, 4b to drive the cycle.

As the cycle moves forward the air flow at the rounded leading side 2a of each crank arm 2 passes smoothly along the lateral sides 2b of the crank arm 2 so that each crank arm 2 is subjected to a substantially reduced air resistance due to the above described cross-sectional configuration. Also, the rounded trailing side 2c of the crank arm 2 results in a smoother air flow around the rounded trailing side 2c substantially avoiding the generation of eddy currents thereby further reducing air resistance.

### Claims

1. A cycle drive crank means comprising a crank having a crank shaft (1) and a pair of crank arms (2), and at least one chain wheel (4) secured to said crank, each of said crank arms (2), having in cross-section, a rounded leading side (2a), with respect to the direction of rotation (R) of said crank means for driving of the cycle, and two lateral sides (2b) extending rearwardly from said leading side (2a) along opposite sides of a central portion of the crank arm (2) to the trailing side (2c) characterized in that said lateral sides (2b) converge inwardly towards each other along their length from the leading side to the trailing side (2c) of said crank arm (2), so that the profile thickness of the central portion adjacent the leading side (2a) is larger than the profile thickness of said central portion adjacent the trailing side (2c).

2. A cycle drive crank means according to claim 1, wherein each of said crank arms (2) has, in cross-section, a rounded trailing side (2c) which trailing side has a smaller radius of curvature than said rounded leading side (2a).

3. A cycle drive crank means according to claim 1 or claim 2 wherein the lateral sides (2b) of the crank arms (2) are substantially flat.

4. A cycle drive crank means according to any one of claims 1 to 3 wherein the rounded side(s) (2a, 2c) is (are) part-circular.

### Patentansprüche

1. Fahrradkurbelantrieb mit einer Kurbel mit einer Kurbelwelle (1), einem Paar von Kurbelarmen (2) und mindestens einem Kettenzahnrad (4), das an der Kurbel befestigt ist, wobei jeder der Kurbelarme (2) im Querschnitt eine abgerundete Vorderseite (2a) bezüglich der Drehrichtung (R) der Kurbel zum Antreiben des Fahrrades, und zwei seitliche Flächen (2b) aufweist, die sich von der Vorderseite (2c) entlang entgegengesetzter Seiten des Mittelteils des Kurbelarms (2) zur Hinterseite (2c) erstrecken, dadurch gekennzeichnet, daß die seitlichen Flächen (2b) über ihrer Breite von der Vorderkante (2a) zur Hinterkante (2c) des Kurbelarms (2) nach innen aufeinander zu konvergieren, so daß die Profildicke des Mittelteils an der Vorderseite (2a) größer ist als die Profildicke des Mittelteils an der Hinterseite (2c).

2. Fahrradkurbelantrieb nach Anspruch 1, dadurch gekennzeichnet, daß jeder der Kurbelarme (2) im Querschnitt eine gekrümmte Hinterseite (2c) aufweist, deren Krümmungsradius kleiner ist als der der Vorderseite (2a).

3. Fahrradkurbelantrieb nach Anspruch 1 oder 2, dadurch gekennzeichnet, daß die seitlichen Flächen (2b) der Kurbelarme (2) im wesentlichen eben sind.

4. Fahrradkurbelantrieb nach einem der Ansprüche 1 bis 3, dadurch gekennzeichnet, daß die gekrümmte (n) Seite (n) (2a, 2c) teilkreisförmig ist (sind).

### Revendications

1. Dispositif de pédalier d'entraînement de bicylette, qui comprend un pédalier, comportant un arbre de pédalier (1) et deux bras de pédalier (2), et au moins un pignon de chaîne (4) fixé au pédalier, chacun des bras de pédalier (2) présentant, en section transversale, un côté avant arrondi (2a) dans le sens de rotation (R) du dispositif de pédalier pour l'entraînement de la bicyclette, et deux faces latérales (2b) s'étendant vers l'arrière, à partir du côté avant (2a), le long des côtés opposés d'une partie centrale du bras de pédalier (2), vers le côté arrière (2c) caractérisé en ce que lesdites faces latérales (2b) convergent vers l'intérieur, l'une vers l'autre, dans le sens de leur longueur du côté avant au côté arrière (2c) du bras de pédalier (2), de sorte que l'épaisseur de profil de la partie centrale près du côté avant (2a) est plus grande que l'épaisseur de profil de la partie centrale près du côté arrière (2c).

2. Dispositif de pédalier d'entraînement de bicyclette suivante la revendication 1, dans lequel chacun des bras de pédalier (2) présente, en section transversale, un côté arrière arrondi (2c) ce côté arrière ayant un rayon de courbure plus petit que le côté avant arrondi (2a).

3. Dispositif de pédalier d'entraînement de bicyclette suivant la revendication 1 ou la revendication 2, dans lequel les faces latérales (2b) des bras de pédalier (2) sont sensiblement plates.

4. Dispositif de pédalier d'entraînement de bicyclette suivant l'une quelconque des revendications 1 à 3, dans lequel le ou les côtés arrondis (2a, 2c) sont partiellement circulaires.

# FIG. 1

# FIG. 2